(19) 

Europäisches
Patentamt
European
Patent Office
Office européen
des brevets

(11) **EP 4 491 397 A1**

(12) **EUROPEAN PATENT APPLICATION**
published in accordance with Art. 153(4) EPC

(43) Date of publication:
**15.01.2025 Bulletin 2025/03**

(21) Application number: **22931035.4**

(22) Date of filing: **09.12.2022**

(51) International Patent Classification (IPC):
*B32B 27/34* (2006.01)     *B32B 27/36* (2006.01)
*B65D 65/02* (2006.01)     *C08G 69/26* (2006.01)
*B65D 1/00* (2006.01)     *C08G 63/183* (2006.01)

(52) Cooperative Patent Classification (CPC):
B32B 27/34; B32B 27/36; B65D 1/00; B65D 65/02;
C08G 63/183; C08G 69/26

(86) International application number:
**PCT/JP2022/045483**

(87) International publication number:
**WO 2023/171065 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.03.2022 JP 2022036771**

(71) Applicant: **MITSUBISHI GAS CHEMICAL
COMPANY, INC.**
**Chiyoda-ku
Tokyo 100-8324 (JP)**

(72) Inventors:
• **KOBAYASHI, Masayuki**
**Hiratsuka-shi, Kanagawa 254-0016 (JP)**
• **MIYABE, Takanori**
**Hiratsuka-shi, Kanagawa 254-0016 (JP)**

(74) Representative: **Vossius & Partner
Patentanwälte Rechtsanwälte mbB
Siebertstrasse 3
81675 München (DE)**

(54) **MULTILAYER BODY AND MULTILAYER CONTAINER**

(57)     A multilayer body includes a layer containing a polyester resin and a layer containing a polyamide resin, wherein the polyamide resin is a copolymer containing a diamine-derived structural unit and a dicarboxylic acid-derived structural unit, 70 mol% or higher of the diamine-derived structural unit is derived from xylylenediamine, and 70 mol% or higher of the dicarboxylic acid-derived structural unit is derived from an α,ω-linear aliphatic dicarboxylic acid having from 4 to 8 carbons and an α,ω-linear aliphatic dicarboxylic acid having from 9 to 12 carbons.

FIG. 1

EP 4 491 397 A1

## Description

Technical Field

The present invention relates to a multilayer body and a multilayer container.

Background Art

Multilayer bodies and multilayer containers having an outer layer and an inner layer composed of a polyester resin and having a barrier layer that is between the outer layer and the inner layer and that is formed from a polyamide resin have been studied in the past (Patent Document 1 and Patent Document 2).

Citation List

Patent Documents

Patent Document 1: JP 2016-169027 A

Patent Document 2: JP 60-232952 A

Summary of Invention

Technical Problem

However, when the present inventors examined the multilayer bodies and multilayer containers having an outer layer formed from a polyester resin, an inner layer formed from a polyester resin, and a barrier layer (intermediate layer) formed from a polyamide resin, they found that certain types of polyamide resins have inferior oxygen barrier properties.

The present inventors also found that when the polyamide resin is a polyamide resin (MXD6) composed of meta-xylylenediamine and adipic acid, the resulting multilayer bodies and multilayer containers have excellent oxygen barrier properties. However, when a barrier layer made of MXD6 is used, the delamination resistance may not necessarily be sufficient depending on the application or the like. Furthermore, depending on the application or the like, some multilayer containers may require better transparency.

Thus, an object of the present invention is to solve the problems described above by providing a multilayer body and a multilayer container having excellent oxygen barrier properties, delamination resistance, and transparency in a well-balanced manner.

Solution to Problem

The present inventors studies the problems described above and found that the issues can be solved by using meta-xylylenediamine, an $\alpha,\omega$-linear aliphatic dicarboxylic acid having from 4 to 8 carbons, and an $\alpha,\omega$-linear aliphatic dicarboxylic acid having from 9 to 12 carbons in combination as raw material monomers for a polyamide resin.

Specifically, the problems described above are solved by the following means.

<1> A multilayer body including a layer containing a polyester resin and a layer containing a polyamide resin, wherein the polyamide resin is a copolymer containing a diamine-derived structural unit and a dicarboxylic acid-derived structural unit; 70 mol% or higher of the diamine-derived structural unit is derived from xylylenediamine; and 70 mol% or higher of the dicarboxylic acid-derived structural unit is derived from an $\alpha,\omega$-linear aliphatic dicarboxylic acid having from 4 to 8 carbons and an $\alpha,\omega$-linear aliphatic dicarboxylic acid having from 9 to 12 carbons.

<2> The multilayer body according to <1>, wherein from 71.0 to 95.0 mol% of the dicarboxylic acid-derived structural unit is derived from an $\alpha,\omega$-linear aliphatic dicarboxylic acid having from 4 to 8 carbons, and from 29.0 to 5.0 mol% of the dicarboxylic acid-derived structural unit is derived from an $\alpha,\omega$-linear aliphatic dicarboxylic acid having from 9 to 12 carbons.

<3> The multilayer body according to <1>, wherein from 75.0 to 95.0 mol% of the dicarboxylic acid-derived structural unit is derived from an $\alpha,\omega$-linear aliphatic dicarboxylic acid having from 4 to 8 carbons, and from 25.0 to 5.0 mol% of the dicarboxylic acid-derived structural unit is derived from an $\alpha,\omega$-linear aliphatic dicarboxylic acid having from 9 to 12 carbons.

<4> The multilayer body according to any one of <1> to <3>, wherein the α,ω-linear aliphatic dicarboxylic acid having from 4 to 8 carbons contains adipic acid, and the α,ω-linear aliphatic dicarboxylic acid having from 9 to 12 carbons contains sebacic acid.

<5> The multilayer body according to any one of <1> to <4>, wherein 70 mol% or higher of the diamine-derived structural unit is derived from meta-xylylenediamine.

<6> The multilayer body according to any one of <1> to <5>, wherein the polyester resin contains a diol-derived structural unit and a dicarboxylic acid-derived structural unit; 70 mol% or higher of the diol-derived structural unit is derived from ethylene glycol; from 60 to 99 mol% of the dicarboxylic acid-derived structural unit is derived from at least one selected from terephthalic acid and an ester thereof; and from 40 to 1 mol% of the dicarboxylic acid-derived structural unit is derived from at least one selected from isophthalic acid and an ester thereof.

<7> The multilayer body according to any one of <1> to <6>, wherein the multilayer body is stretched.

<8> A multilayer container including the multilayer body described in any one of <1> to <7>.

Advantageous Effects of Invention

According to the present invention, a multilayer body and a multilayer container having excellent oxygen barrier properties, delamination resistance, and transparency in a well-balanced manner can be provided.

Brief Description of Drawings

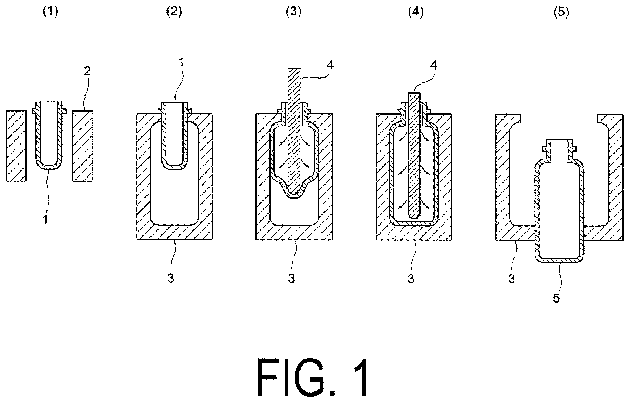

FIG. 1 is a schematic view illustrating a method of manufacturing a multilayer container through cold parison molding.

Description of Embodiments

An embodiment for carrying out the present invention (hereinafter referred to simply as "the present embodiment") will be described next in detail. The present embodiment described below is an example for describing the present invention, and the present invention is not limited only to the present embodiment.

In the present specification, numerical values described before and after the term "to" are respectively the lower limit and the upper limit of a range including the numerical values.

In the present specification, various physical property values and characteristic values are those at 23°C, unless otherwise noted.

When a measurement method described in a standard set forth in the present specification differs depending on the year, it is based on the standard as of January 1, 2022 unless otherwise stated.

The multilayer body of the present embodiment includes a layer containing a polyester resin (hereinafter may simply be referred to as "polyester resin layer") and a layer containing a polyamide resin (hereinafter may simply be referred to as "polyamide resin layer"). The polyamide resin is a copolymer containing a diamine-derived structural unit and a dicarboxylic acid-derived structural unit. 70 mol% or higher of the diamine-derived structural unit is derived from xylylenediamine. 70 mol% or higher of the dicarboxylic acid-derived structural unit is derived from an α,ω-linear aliphatic dicarboxylic acid having from 4 to 8 carbons and an α,ω-linear aliphatic dicarboxylic acid having from 9 to 12 carbons.

With such a structure, a multilayer body and a multilayer container having excellent oxygen barrier properties, delamination resistance, and transparency in a well-balanced manner can be obtained. Furthermore, a multilayer body and a multilayer container having excellent carbonic acid barrier properties can be obtained.

That is, a layer containing a polyamide resin composed of meta-xylylenediamine and adipic acid has an excellent oxygen barrier property, but depending on the application, there is room for improvement in delamination resistance and transparency. Regarding this, the present inventors conducted a study and found that the problem above can be solved by using an α,ω-linear aliphatic dicarboxylic acid having from 4 to 8 carbons and an α,ω-linear aliphatic dicarboxylic acid having from 9 to 12 carbons in combination as dicarboxylic acid components constituting the polyamide resin. In particular, it was remarkable that both the delamination resistance and the transparency were significantly improved.

The reason why the delamination resistance was improved is presumed to be as follows. When a multilayer body is molded, a polyester resin and a polyamide resin are melted in separate cylinders and are separately injected to form a multilayer body. However, in the mold for injection molding, solidification proceeds while an interface between the polyester resin and the polyamide resin remains in a melted state. In the present embodiment, it is presumed that by using the α,ω-linear aliphatic dicarboxylic acid having from 4 to 8 carbons and the α,ω-linear aliphatic dicarboxylic acid having from 9 to 12 carbons in combination, the solidification proceeds slowly, and the polyester resin and the polyamide resin can interact more strongly. Therefore, the adhesion at the interface between the polyester resin and the polyamide resin improves and the delamination resistance improves. In addition, it is presumed that because of the slow solidification process, the adhesion at the interface between the polyester resin and the polyamide resin is high, and thus the roughness of the interface is suppressed and the transparency further improves.

Layer Containing Polyester Resin (Polyester Resin Layer)

The multilayer body of the present embodiment includes a layer containing a polyester resin (polyester resin layer).

The polyester resin layer in the present embodiment contains a polyester resin as a main component. Here, the term "main component" means that polyester resin is the component with the largest content amongst components contained in the polyester resin layer. The amount of polyester resin contained in the polyester resin layer is preferably 80 mass% or more, more preferably 90 mass% or more, even more preferably 95 mass% or more, and yet even more preferably 98 mass% or more.

The polyester resin layer may contain only one type of polyester resin or two or more types of polyester resins. When the polyester resin layer contains two or more types of polyester resins, the total amount thereof preferably falls within the above range.

The polyester resin used in the present embodiment preferably contains a diol-derived structural unit and a dicarboxylic acid-derived structural unit. 70 mol% or higher of the diol-derived structural unit is preferably derived from ethylene glycol. 60 mol% or higher of the dicarboxylic acid-derived structural unit is preferably derived from at least one selected from terephthalic acid and an ester thereof (preferably terephthalic acid).

In the diol-derived structural unit, preferably 85 mol% or higher, more preferably 90 mol% or higher, even more preferably 95 mol% or higher, and yet even more preferably 99 mol% or higher is derived from ethylene glycol.

In addition, in the dicarboxylic acid-derived structural unit, preferably 70 mol% or higher, more preferably 80 mol% or higher, and even more preferably 90 mol% or higher is derived from at least one selected from terephthalic acid and an ester thereof. The upper limit of the foregoing may be 100 mol%, and is preferably 99 mol% or less.

Furthermore, in the present embodiment, from 60 to 99 mol% of the dicarboxylic acid-derived structural unit is preferably derived from at least one selected from terephthalic acid and an ester thereof (preferably terephthalic acid), and from 40 to 1 mol% of the dicarboxylic acid-derived structural unit is preferably derived from at least one selected from isophthalic acid and an ester thereof (preferably isophthalic acid). By including a structural unit derived from at least one selected from isophthalic acid and an ester thereof, crystallization of the polyester resin proceeds slowly, and solidification proceeds slowly. Therefore, it is presumed that the interaction with the polyamide resin contained in the polyamide resin layer becomes stronger, and the delamination resistance is likely to improve.

Furthermore, in the present embodiment, the proportion of structural unit derived from at least one selected from isophthalic acid and an ester thereof in the dicarboxylic acid-derived structural unit is preferably 20 mol% or less, more preferably 15 mol% or less, even more preferably 10 mol% or less, and yet even more preferably 5 mol% or less.

In the polyester resin used in the present embodiment, the diol-derived structural unit may further contain another structural unit such as a structural unit derived from 1,4-cyclohexanedimethanol. However, in the present embodiment, preferably 85 mol% or higher, more preferably 90 mol% or higher, even more preferably 95 mol% or higher, and yet even more preferably 99 mol% or higher of the diol-derived structural unit is derived from ethylene glycol.

Moreover, in the polyester resin used in the present embodiment, the dicarboxylic acid-derived structural unit may further contain another structural unit such as a structural unit derived from a naphthalene dicarboxylic acid. However, in the present embodiment, preferably 85 mol% or higher, more preferably 90 mol% or higher, even more preferably 95 mol% or higher, and yet even more preferably 99 mol% or higher of the dicarboxylic acid-derived structural unit is terephthalic acid, isophthalic acid, and an ester thereof (preferably terephthalic acid and isophthalic acid).

In the polyester resin in the present embodiment, preferably 70 mass% or more, more preferably 80 mass% or more, even more preferably 90 mass% or more, yet even more preferably 95 mass% or more, still more preferably 98 mass% or more, and yet still more preferably 99 mass% or more of all structural units excluding the end groups are composed of a diol-derived structural unit and a dicarboxylic acid-derived structural unit.

The polyester resin contained in the polyester resin layer may be a crystalline polyester resin having a clear melting point, or may be an amorphous polyester resin having no clear melting point, but is preferably a crystalline polyester resin having a melting point.

The polyester resin in the polyester resin in the present embodiment preferably has a melting point of 150°C or higher, more preferably 200°C or higher, even more preferably 220°C or higher, and yet even more preferably 300°C or higher, and is preferably 290°C or lower, more preferably 280°C or lower. The melting point is measured in accordance with a method described in Examples below.

When the polyester resin layer in the present embodiment includes two or more types of polyester resins, the melting point of the polyester resin is a value obtained by multiplying the melting point of each polyester resin by the mass fraction.

The intrinsic viscosity of the polyester resin is preferably 0.30 dL/g or more, more preferably 0.40 dL/g or more, and even more preferably 0.60 dL/g or more. Further, the intrinsic viscosity is preferably 2.00 dL/g or less, more preferably 1.50 dL/g or less, even more preferably 1.00 dL/g or less, and yet even more preferably 0.90 dL/g or less.

When the polyester resin layer in the present embodiment contains two or more types of polyester resins, the intrinsic viscosity is the intrinsic viscosity of the mixture of polyester resins.

The intrinsic viscosity is measured according to the following method.

A polyester resin (pellets) is dissolved in a mixed solution of phenol/1,1,2,2-tetrachloroethane (mass ratio 1/1) by stirring at 110°C for 1 hour to give a concentration of 1.00 g/dL. The resulting sample solution is then cooled to 30°C. The number of seconds for the sample solution to fall down and the number of seconds for only the solvent to fall down are measured separately at 30°C using a fully automatic solution viscometer, and the intrinsic viscosity is calculated in accordance with Equation (1) below.

$$\text{Intrinsic Viscosity} = ((1 + 4K_H\eta_{sp})^{0.5}-1)/(2K_HC) \ ... \ (1)$$

where $\eta_{sp} = \eta/\eta_0-1$, $\eta$ being the number of seconds for the sample solution to fall down, $\eta_0$ being the number of seconds for only the solvent to fall down, C is the concentration of the sample solution (g/dL), and $K_H$ is Huggins' constant. $K_H$ is 0.33.

For the polyester resin, the polyester resins described in paragraphs [0064] to [0080] of JP 2016-169027 A, paragraphs [0010] to [0021] of JP 2006-111718 A, JP 2017-105873 A, and WO 2013/168804 can be referenced, and the contents of the disclosures are incorporated herein.

The polyester resin layer of the present embodiment may contain other components without departing from the scope of the present embodiment. Specifically, various additives can be added, with examples being antioxidants, optical stabilizers, UV absorbers, plasticizers, bulking agents, matting agents, dryness adjusting agents, antistatic agents, anti-settling agents, surfactants, flow modifiers, drying oils, waxes, colorants, reinforcing agents, surface smoothing agents, leveling agents, curing reaction accelerators, and thickening agents. For details on the other components, refer to the description in paragraph [0026] of JP 2006-111718 A, the contents of which are incorporated in the present specification.

Layer Containing Polyamide Resin (Polyamide Resin Layer)

The multilayer body of the present embodiment includes a layer containing a polyamide resin (polyamide resin layer). The polyamide resin layer functions as a barrier layer in the multilayer body.

The polyamide resin layer in the present embodiment contains a xylylenediamine-based polyamide resin described below as a main component. Here, the term "main component" means that the xylylenediamine-based polyamide resin is the component with the largest content amongst components contained in the polyamide resin layer. The amount of the xylylenediamine-based polyamide resin is preferably 80 mass% or more, more preferably 90 mass% or more, even more preferably 95 mass% or more, and yet even more preferably 98 mass% or more.

The polyamide resin contained in the polyamide resin layer contains a polyamide resin containing a diamine-derived structural unit and a dicarboxylic acid-derived structural unit, 70 mol% or higher of the diamine-derived structural unit being derived from xylylenediamine, and 70 mol% or higher of the dicarboxylic acid-derived structural unit being derived from an α,ω-linear aliphatic dicarboxylic acid having from 4 to 8 carbons and an α,ω-linear aliphatic dicarboxylic acid having from 9 to 12 carbons (hereinafter may be referred to as "xylylenediamine-based polyamide resin"). Here, "70 mol% or higher of the dicarboxylic acid-derived structural unit being derived from an α,ω-linear aliphatic dicarboxylic acid having from 4 to 8 carbons and an α,ω-linear aliphatic dicarboxylic acid having from 9 to 12 carbons" means that the dicarboxylic acid-derived structural unit contains both a structural unit derived from an α,ω-linear aliphatic dicarboxylic acid having from 4 to 8 carbons and a structural unit derived from an α,ω-linear aliphatic dicarboxylic acid having from 9 to 12 carbons, and the total amount of the structural unit derived from an α,ω-linear aliphatic dicarboxylic acid having from 4 to 8 carbons and the structural unit derived from an α,ω-linear aliphatic dicarboxylic acid having from 9 to 12 carbons accounts for 70 mol% or higher of the entire dicarboxylic acid-derived structural unit.

The xylylenediamine-based polyamide resin in the present embodiment is a copolymer in which the dicarboxylic acid-derived structural unit contains both a structural unit derived from an α,ω-linear aliphatic dicarboxylic acid having from 4 to 8 carbons and a structural unit derived from an α,ω-linear aliphatic dicarboxylic acid having from 9 to 12 carbons. That is, the xylylenediamine-based polyamide resin in the present embodiment is a copolymer of at least xylylenediamine, an α,ω-linear aliphatic dicarboxylic acid having from 4 to 8 carbons, and an α,ω-linear aliphatic dicarboxylic acid having from 9 to 12 carbons. By using a copolymer as described above, the delamination resistance is improved. That is, when a blend of a polyamide resin (e.g. MXD6) in which 70 mol% or higher of the diamine-derived structural unit is derived from xylylenediamine and 70 mol% or higher of the dicarboxylic acid-derived structural unit is derived from an α,ω-linear aliphatic dicarboxylic acid having from 4 to 8 carbons and a polyamide resin (e.g. MXD10) in which 70 mol% or higher of the diamine-derived structural unit is derived from xylylenediamine and 70 mol% or higher of the dicarboxylic acid-derived structural unit is derived from an α,ω-linear aliphatic dicarboxylic acid having from 9 to 12 carbons is used, a sufficient effect of delamination resistance cannot be obtained. This is presumably because MXD6 or the like and MXD10 or the like are not sufficiently compatible with each other. In the present embodiment, this problem is solved by using a copolymer of the foregoing (MXD610 and the like).

The xylylenediamine-based polyamide resin used in the present embodiment is a copolymer of a xylylenediamine (preferably meta-xylylenediamine), an $\alpha,\omega$-linear aliphatic dicarboxylic acid having from 4 to 8 carbons (preferably adipic acid), and an $\alpha,\omega$-linear aliphatic dicarboxylic acid having from 9 to 12 carbons (preferably sebacic acid). In the xylylenediamine-based polyamide resin used in the present embodiment, preferably 70 mass% or more, more preferably 80 mass% or more, even more preferably 90 mass% or more, yet even more preferably 95 mass% or more, still more preferably 98 mass% or more, and yet still more preferably 99 mass% or more of all structural units excluding the end groups are composed of structural units derived from a xylylenediamine, an $\alpha,\omega$-linear aliphatic dicarboxylic acid having from 4 to 8 carbons, and an $\alpha,\omega$-linear aliphatic dicarboxylic acid having from 9 to 12 carbons.

In the xylylenediamine-based polyamide resin, 70 mol% or more, preferably 80 mol% or more, more preferably 90 mol% or more, even more preferably 95 mol% or more, and yet even more preferably 99 mol% or more of the diamine-derived structural unit is derived from a xylylenediamine (preferably meta-xylylenediamine). The upper limit may be 100 mol%. The xylylenediamine is preferably meta-xylylenediamine and para-xylylenediamine, and is more preferably meta-xylylenediamine.

In the present embodiment, meta-xylylenediamine and para-xylylenediamine preferably account for from 99 to 100 mol% of the entire xylylenediamine. A molar ratio of meta-xylylenediamine to para-xylylenediamine in the xylylenediamine is preferably from 10 to 100/from 90 to 0, more preferably from 30 to 100/from 70 to 0, even more preferably from 50 to 100/from 50 to 0, yet even more preferably from 80 to 100/from 20 to 0, still more preferably from 90 to 100/from 10 to 0, and yet still more preferably from 95 to 100/from 5 to 0, when the total of meta-xylylenediamine and para-xylylenediamine is 100 mol. When the ratio of meta-xylylenediamine is increased, an increase in melting point can be suppressed. When the temperature during processing is decreased, the occurrence of burn marks or gelation caused by the xylylenediamine-based polyamide resin can be more effectively suppressed.

Examples of the diamine besides xylylenediamine that can be used as a raw material diamine component of the polyamide resin in the present embodiment include aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, and 2,4,4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having an aromatic ring, such as bis(4-aminophenyl) ether, p-phenylenediamine, and bis(aminomethyl)naphthalene. One type thereof can be used, or two or more types thereof can be mixed and used.

In the xylylenediamine-based polyamide resin in the present embodiment, 70 mol% or higher, preferably 75 mol% or higher, more preferably 80 mol% or higher, even more preferably 90 mol% or higher, still preferably 95 mol% or higher, still more preferably 98 mol% or higher, and further more preferably 99.9 mol% or higher of the dicarboxylic acid-derived structural unit is accounted for by the structural unit derived from an $\alpha,\omega$-linear aliphatic dicarboxylic acid having from 4 to 8 carbons and structural unit derived from an $\alpha,\omega$-linear aliphatic dicarboxylic acid having from 9 to 12 carbons. The upper limit of the total may be 100 mol%.

The use of the $\alpha,\omega$-linear aliphatic dicarboxylic acid having from 4 to 8 carbons can increase the amide bond density, which tends to result in a polyamide resin having an excellent oxygen barrier property. In addition, when the $\alpha,\omega$-linear aliphatic dicarboxylic acid having from 9 to 12 carbons is used, the transparency tends to improve as compared with the case where only the $\alpha,\omega$-linear aliphatic dicarboxylic acid having from 4 to 8 carbons is used as the dicarboxylic acid component.

In the present embodiment, the ratio of the $\alpha,\omega$-linear aliphatic dicarboxylic acid having from 4 to 8 carbons and the $\alpha,\omega$-linear aliphatic dicarboxylic acid having from 9 to 12 carbons can be adjusted depending on the application.

More specifically, the proportion of the $\alpha,\omega$-linear aliphatic dicarboxylic acid having from 4 to 8 carbons (preferably adipic acid) in the dicarboxylic acid-derived structural unit may be 10.0 mol% or higher, 30.0 mol% or higher, 50.0 mol% or higher, 60.0 mol% or higher, 65.0 mol% or higher, or 70.0 mol%, and is preferably 71.0 mol% or higher, more preferably 75.0 mol% or higher, and even more preferably 78.0 mol% or higher. By setting the proportion to be equal to or higher than the lower limit, the gas barrier property tends to further improve. Further, the proportion of the $\alpha,\omega$-linear aliphatic dicarboxylic acid having from 4 to 8 carbons is preferably 95.0 mol or less, more preferably 90.0 mol% or less, even more preferably 85.0 mol% or less, still preferably 84.0 mol% or less, and still more preferably 82.0 mol% or less. By setting the proportion to be equal to or lower than the upper limit, transparency and delamination resistance tend to improve significantly.

The proportion of the $\alpha,\omega$-linear aliphatic dicarboxylic acid having from 9 to 12 carbons (preferably sebacic acid) in the dicarboxylic acid-derived structural unit may be 90.0 mol% or less, 70.0 mol% or less, 50.0 mol% or less, 40.0 mol% or less, 35.0 mol% or less, or 30.0 mol% or less, and is preferably 29.0 mol% or less, more preferably 25.0 mol% or less, and even more preferably 22.0 mol% or less. By setting the proportion to be equal to or lower than the upper limit, the gas barrier property tends to further improve. Further, the proportion of the $\alpha,\omega$-linear aliphatic dicarboxylic acid having from 9 to 12 carbons is preferably 5.0 mol% or higher, more preferably 10.0 mol% or higher, even more preferably 15.0 mol% or higher, still preferably 16.0 mol% or higher, and still more preferably 18.0 mol% or higher. In particular, when the proportion of the structural unit derived from the $\alpha,\omega$-linear aliphatic dicarboxylic acid having from 9 to 12 carbons is preferably from 10.0 to 40.0 mol%, more preferably from 15.0 to 35.0 mol%, and even more preferably from 15.0 to 29.0 mol% of the entire dicarboxylic acid-derived structural unit, the transparency can improve significantly.

The $\alpha,\omega$-linear aliphatic dicarboxylic acid having from 4 to 8 carbons is, for example, succinic acid, glutaric acid, pimelic acid, adipic acid, or suberic acid, and is preferably adipic acid.

The $\alpha,\omega$-linear aliphatic dicarboxylic acid having from 9 to 12 carbons is, for example, azelaic acid, sebacic acid, undecanedioic acid, and dodecanedioic acid, and is preferably sebacic acid. The sebacic acid can be derived from a plant source and can enhance the bio-base degree of the resin.

In the present embodiment, the $\alpha,\omega$-linear aliphatic dicarboxylic acid having from 4 to 8 carbons preferably contains adipic acid, and the $\alpha,\omega$-linear aliphatic dicarboxylic acid having from 9 to 12 carbons preferably contains sebacic acid. Furthermore, adipic acid preferably accounts for 90 mol% or higher, more preferably 95 mol% or higher, even more preferably 99% or higher of the $\alpha,\omega$-linear aliphatic dicarboxylic acid having from 4 to 8 carbons, and sebacic acid preferably accounts for 90 mol% or higher, more preferably 95 mol% or higher, even more preferably 99% or higher of the $\alpha,\omega$-linear aliphatic dicarboxylic acid having from 9 to 12 carbons.

In the xylylenediamine-based polyamide resin, one type or two or more types of each of the structural unit derived from the $\alpha,\omega$-linear aliphatic dicarboxylic acid having from 4 to 8 carbons and the structural unit derived from the $\alpha,\omega$-linear aliphatic dicarboxylic acid having from 9 to 12 carbons may be used. When two or more types are contained, the total amount thereof preferably falls within the above range.

Examples of dicarboxylic acid components other than the $\alpha,\omega$-linear aliphatic dicarboxylic acid having from 4 to 12 carbons include phthalic acid compounds, such as isophthalic acid, terephthalic acid, and ortho-phthalic acid; and naphthalenedicarboxylic acid, such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One type can be used, or two or more types can be mixed and used.

A particularly preferred embodiment of the xylylenediamine-based polyamide resin in the present embodiments is a polyamide resin containing a diamine-derived structural unit and a dicarboxylic acid-derived structural unit, 95 mol% or higher (more preferably 98 mol% or higher, even more preferably 99.9 mol% or higher) of the diamine-derived structural unit being derived from meta-xylylenediamine, from 75.0 to 95.0 mol% of the dicarboxylic acid-derived structural unit being derived from adipic acid, from 25.0 to 5.0 mol% of the dicarboxylic acid-derived structural unit being derived from sebacic acid, and the total of the structural unit derived from adipic acid and the structural unit derived from sebacic acid accounting for 95 mol% or higher (more preferably 98 mol% or higher, still more preferably 99.9 mol% or higher) of the dicarboxylic acid-derived structural unit.

Note that, the xylylenediamine-based polyamide resin used in the present embodiment contains a dicarboxylic acid-derived structural unit and a diamine-derived structural unit, but may also contain a structural unit in addition to a dicarboxylic acid-derived structural unit and a diamine-derived structural unit, or other moieties such as end groups. Examples of the additional structural unit include, but are not limited to, structural units derived from, for example, a lactam such as $\varepsilon$-caprolactam, valerolactam, laurolactam, and undecalactam, or from an aminocarboxylic acid such as 11-aminoundecanoic acid and 12-aminododecanoic acid. Furthermore, the xylylenediamine-based polyamide resin used in the present embodiment may contain trace amounts of other components such as an additive used in synthesis.

In the xylylenediamine-based polyamide resin in the present embodiment, preferably 70 mass% or more, more preferably 80 mass% or more, even more preferably 90 mass% or more, still preferably 95 mass% or more, still more preferably 98 mass% or more, and further preferably 99 mass% or more of all structural units excluding the end groups are composed of a dicarboxylic acid-derived structural unit and a diamine-derived structural unit. The upper limit may be 100 mass%.

The xylylenediamine-based polyamide resin used in the present embodiment preferably has a melting point of 195°C or higher, more preferably 200°C or higher, even more preferably 205°C or higher, still preferably 210°C or higher, and still more preferably 215°C or higher, as measured in accordance with differential scanning calorimetry. The xylylenediamine-based polyamide resin preferably has a melting point of 235°C or lower, more preferably 230°C or lower, even more preferably 225°C or lower, and still preferably 220°C or lower.

The melting point is measured in accordance with descriptions in the Examples below.

When the polyamide resin layer in the present embodiment contains two or more types of xylylenediamine-based polyamide resins, only the melting point of the xylylenediamine-based polyamide resin serving as the main component needs to satisfy the above range, and it is more preferable that all xylylenediamine-based polyamide resins have melting points within the above range.

In the present embodiment, the difference between the melting point of the polyester resin contained in the polyester resin layer and the melting point of the xylylenediamine-based polyamide resin contained in the polyamide resin layer (Tm of polyester resin - Tm of polyamide resin) is preferably 12°C or more. Further, the result of "Tm of polyester resin - Tm of polyamide resin" above is preferably 57°C or less, more preferably 52°C or less, even more preferably 47°C or less, still preferably 42°C or less, and still more preferably 37°C or less. By setting the result to be equal to or lower than the upper limit, moldability in a multilayer form with a polyester resin tends to be excellent.

The xylylenediamine-based polyamide resin used in the present embodiment preferably has a glass transition temperature of 61°C or higher, more preferably 70°C or higher, even more preferably 76°C or higher, still preferably 78°C or higher, and still more preferably 80°C or higher, as measured in accordance with differential scanning calorimetry. By setting the glass transition temperature to be equal to or higher than the lower limit, delamination tends to be suppressed during biaxial stretching and blowing in the temperature range during blow molding. The glass transition temperature of the xylylenediamine-based polyamide resin is preferably 87°C or lower, more preferably 86°C or lower, even more preferably 85°C or lower, still preferably 84°C or lower, and still more preferably 83°C or lower. By setting the glass transition temperature to be equal to or lower than the upper limit, moldability in a multilayer form with a polyester resin tends to be excellent.

The glass transition temperature is measured according to descriptions in Examples below.

When the polyamide resin layer in the present embodiment contains two or more types of xylylenediamine-based polyamide resins, only the glass transition temperature of the xylylenediamine-based polyamide resin serving as the main component needs to satisfy the above range, and it is more preferable that all xylylenediamine-based polyamide resins have glass transition temperatures within the above range.

In the present embodiment, the polyamide resin layer may contain polyamide resins in addition to the xylylenediamine-based polyamide resin and components in addition to polyamide resin. Specific examples of the components in addition to the polyamide resin include a thermoplastic resin other than the polyamide resins, an oxidation accelerator, a yellowing inhibitor, an oxygen absorber, a heat stabilizer, a light stabilizer, a moisture-proof agent, a waterproof agent, a lubricant (calcium stearate or the like), a spreading agent, and the like. Reference can be made to the descriptions in paragraph [0061] to [0070] of WO 2021/177126, the contents of which are incorporated herein.

The polyamide resin in addition to the xylylenediamine-based polyamide resin may be an aliphatic polyamide resin or a semi-aromatic polyamide resin, or may be a mixture of an aliphatic polyamide resin and a semi-aromatic polyamide resin, and preferably includes at least a semi-aromatic polyamide resin. For example, for the polyamide resin, reference can be made to the disclosures in paragraphs [0011] to [0013] of JP 2011-132550 A, the contents of which are incorporated herein.

Examples of the aliphatic polyamide resin include polyamide 6 and polyamide 66, and polyamide 66 is preferable.

Examples of the semi-aromatic polyamide resin include terephthalic acid-based polyamide resins (polyamide 6T, polyamide 9T, polyamide 10T), terephthalic acid- and isophthalic acid-based polyamide resins (polyamide 6T/6I, polyamide 9T/9I, polyamide 10T/10I).

The polyamide resin layer may contain only one type of polyamide resin or may contain two or more types of polyamide resins in addition to the xylylenediamine-based polyamide resin. The polyamide resin in addition to the xylylenediamine-based polyamide resin is preferably blended at a ratio of 10 parts by mass or less with respect to 100 parts by mass of the xylylenediamine-based polyamide resin.

Characteristics of multilayer Body

The multilayer body of the present embodiment can have a low haze. Specifically, the haze of the multilayer body is preferably 1.30% or less, more preferably 1.20% or less, even more preferably 1.10% or less, still preferably 1.00% or less, and still more preferably 0.72% or less. The lower limit is ideally 0%, but the required performance is satisfied even when the lower limit is, for example, 0.01% or more. Such a low haze is achieved particularly by using an isophthalic acid-modified polyester resin and a polyamide resin using a combination of the $\alpha,\omega$-linear aliphatic dicarboxylic acid having from 4 to 8 carbons and the $\alpha,\omega$-linear aliphatic dicarboxylic acid having from 9 to 12 carbons as raw material monomers.

The haze is measured according to descriptions in Examples below.

Layer Configuration

The multilayer body of the present embodiment is a multilayer body having at least one layer containing a polyester resin as a main component (polyester resin layer) and at least one layer containing a polyamide resin as a main component (polyamide resin layer). The polyester resin layer and the polyamide resin layer are usually in contact with each other.

The number of layers constituting the multilayer body is preferably at least three layers. In the present embodiment, an embodiment including at least two polyester resin layers and at least one polyamide resin layer is exemplified. That is, a preferred embodiment of the multilayer body of the present embodiment is a multilayer body including a layer containing a polyester resin, a layer containing a polyamide resin, and a layer containing a polyester resin positioned in this order (polyester resin layer/polyamide resin layer/polyester resin layer).

More specifically, the number of layers constituting the multilayer body is more preferably from 3 to 10, and even more preferably from 3 to 5.

The number of polyester resin layers in the multilayer container is preferably from 1 to 5, and more preferably from 2 to 4. The number of polyamide resin layers in the multilayer container is preferably from 1 to 3, and more preferably 1 or 2.

Further, the multilayer container may have a layer structure composed of one polyester resin layer and one polyamide resin layer, which is polyester resin layer/polyamide resin (with the polyester resin layer being the inner layer) or polyamide resin layer/polyester resin (with the polyamide resin layer being the inner layer), or may have a five-layer structure of polyester resin layer/polyamide resin layer/polyester resin layer/polyamide resin layer/polyester resin layer.

From the perspective of achieving superior delamination resistance, the polyamide resin layer is preferably arranged at the center or at the inner side, and is more preferably arranged at the inner side. "Polyamide resin layer is arranged at the center" means that, in a cross section of the multilayer body in the thickness direction, a polyamide resin layer is present near the center in the thickness direction. "Polyamide resin layer is arranged at the inner side" means that, in a cross section of the multilayer body in the thickness direction, a polyamide resin layer is present at a position near the inner surface side in the thickness direction. As the position of the polyamide resin layer of the present embodiment, an aspect in which the intermediate layer is a polyamide resin layer is exemplified in JP 02-229023 A, the contents of which are incorporated herein.

In addition to polyester resin layer and polyamide resin layer, the multilayer body of the present embodiment may include any layer depending on the desired performance and the like. Examples of such layer include an oxygen-absorbing layer, an adhesive layer, a gas barrier layer in addition to the polyamide resin layer, a protective layer, a design layer, and the like. For details thereof, refer to the descriptions in paragraphs [0012] to [0046] of JP 2021-080025 A, the contents of which are incorporated herein by reference.

Stretching

The multilayer body of the present embodiment is preferably stretched. Examples of stretching include biaxial stretching and blow molding that is performed when molding a multilayer container such as a bottle.

As a preferred embodiment of the stretching in the present embodiment, a preform (also referred to as a parison) containing the multilayer body of the present embodiment is preferably subjected to biaxial stretching and blow molding. In particular, a stretching step using a stretch rod and high-pressure air is preferably provided. Details of biaxial stretching and blow molding will be described later.

The thickness of the polyester resin and the thickness of the polyamide resin layer in the multilayer body after stretching are the same as the thickness of the polyester resin and the thickness of the polyamide resin layer in the multilayer container described below, respectively, and the preferred ranges are also the same.

In the multilayer body of the present embodiment, the mass of the polyamide resin layer is preferably 1 mass% or more, more preferably 2 mass% or more, may be 3 mass% or more, and is preferably 20 mass% or less, more preferably 15 mass% or less, and particularly preferably 10 mass% or less with respect to the total mass of the multilayer body. By setting the mass to be equal to or higher than the lower limit, the barrier property of the multilayer body tends to further improve. Further, by setting the mass to be equal to or lower than the upper limit, the transparency of the multilayer body tends to further improve. Meanwhile, in the multilayer body of the present embodiment, the mass of the polyester resin layer is preferably 80 mass% or more, more preferably 85 mass% or more, and even more preferably 90 mass% or more with respect to the total mass of the multilayer body. Further, in the multilayer body of the present embodiment, the mass of the polyester resin layer is preferably 99 mass% or less, more preferably 98 mass% or less, and may be 97 mass% or less with respect to the total mass of the multilayer body.

Multilayer Container

In the present embodiment, a multilayer container containing the multilayer body of the present embodiment is exemplified.

The shape of the multilayer container is not limited, and may be, for example, a molded container such as a bottle, a cup, a tube, a tray, or a storage container, or may be a bag-shaped container such as a pouch, a standing pouch, or a zippered storage bag. In the present embodiment, the multilayer container is preferably a bottle.

Moreover, it is not necessary for all parts of the bottle to contain the multilayer body of the present embodiment, especially the polyamide resin layer. For example, in an aspect, the body of the bottle contains the polyamide resin layer, but the vicinity of the opening (mouth plug section) does not contain the polyamide resin layer. However, the polyamide resin layer is preferably present up to near the opening of the bottle because such a configuration provides even higher barrier performance.

The capacity of the multilayer container of the present embodiment is preferably from 0.1 to 2.0 L, preferably from 0.2 to 1.5 L, and more preferably from 0.3 to 1.0 L from the viewpoint of content storage performance.

The thickness of the body (total of the polyester resin layer, polyamide resin layer, etc.) of the multilayer container of the present embodiment is preferably 0.02 mm or more, more preferably 0.15 mm or more, even more preferably 0.20 mm or more, and is preferably 5.0 mm or less, more preferably 3.0 mm or less, and even more preferably 2.5 mm or less.

The thickness of the inner layer (polyester resin layer) of the multilayer container of the present embodiment is preferably 0.01 mm or more, more preferably 0.03 mm or more, even more preferably 0.05 mm or more, and preferably 2.0 mm or less, more preferably 1.5 mm or less, and even more preferably 1.0 mm or less.

The thickness of the outer layer (polyester resin layer) is preferably 0.01 mm or more, more preferably 0.05 mm or more, even more preferably 0.05 mm or more, and preferably 2.0 mm or less, more preferably 1.5 mm or less, and even more preferably 1.0 mm or less.

The thickness of the polyamide resin layer is preferably 0.005 mm or more, more preferably 0.01 mm or more, and even more preferably 0.02 mm or more, and is preferably 0.2 mm or less, more preferably 0.15 mm or less, and even more preferably 0.1 mm or less. When two or more polyamide resin layers are provided, it is preferable that the total thickness of the polyamide resin layers has the above thickness. When two or more polyamide resin layers are provided and an intermediate layer is provided between the polyamide resin layers, the thickness of the intermediate layer is preferably 0.01 mm or more, more preferably 0.03 mm or more, even more preferably 0.05 mm or more, and preferably 2.0 mm or less, more preferably 1.5 mm or less, and even more preferably 1.0 mm or less.

In the multilayer container (in particular, a bottle) of the present embodiment, the mass of the polyamide resin layer is preferably 1 mass% or more, more preferably 2 mass% or more, may be 3 mass% or more, and is preferably 20 mass% or less, more preferably 15 mass% or less, and particularly preferably 10 mass% or less with respect to the total mass of the multilayer container. By setting the mass to be equal to or higher than the lower limit, the barrier property of the multilayer container tends to further improve. Further, by setting the mass to be equal to or lower than the upper limit, the transparency of the multilayer container tends to further improve. Meanwhile, in the multilayer container of the present embodiment, the mass of the polyester resin layer is preferably 80 mass% or more, more preferably 85 mass% or more, and even more preferably 90 mass% or more with respect to the total mass of the multilayer container. Further, in the multilayer container of the present embodiment, the mass of the polyester resin layer is preferably 99 mass% or less, more preferably 98 mass% or less, and may be 97 mass% or less with respect to the total mass of the multilayer container.

The multilayer container of the present embodiment has an excellent oxygen barrier property. Specifically, the oxygen barrier property of the multilayer container of the present embodiment is preferably 0.026 cc/(bottle·day·0.21 atm) or less, more preferably 0.025 cc/(bottle·day·0.21 atm) or less, even more preferably 0.024 cc/(bottle·day·0.21 atm), still preferably 0.023 cc/(bottle-day-0.21 atm) or less, and still more preferably 0.022 cc/(bottle·day·0.21 atm) or less. The ideal lower limit is 0 cc/(bottle·day·0.21 atm), but even a lower limit of 0.001 cc/(bottle-day 0.21 atm) or more can still sufficiently satisfy the required performance. Such oxygen barrier property is achieved particularly by using a polyamide resin using an $\alpha,\omega$-linear aliphatic dicarboxylic acid having from 4 to 8 carbons as a raw material monomer, increasing the thickness of the polyamide resin layer, or the like.

The multilayer container of the present embodiment has an excellent carbon dioxide barrier property. Specifically, the carbon dioxide barrier property of the multilayer container of the present embodiment is preferably 3.51 cc/(bottle·day) or less, and more preferably 3.50 cc/(bottle·day) or less. The ideal lower limit is 0 cc/(bottle·day), but even a lower limit of 1.00 cc/(bottle·day) or more can still sufficiently satisfy the required performance. Such carbon dioxide barrier property is achieved particularly by using a polyamide resin using an $\alpha,\omega$-linear aliphatic dicarboxylic acid having from 4 to 8 carbons as a raw material monomer, increasing the thickness of the polyamide resin layer, or the like.

The target content to be stored in the multilayer container of the present embodiment is not limited, and examples include food products, cosmetics, pharmaceuticals, toiletries, mechanical, electrical and electronic components, oils, and resins. In particular, the multilayer container of the present embodiment can be suitably used as a container for storing food products.

Examples of food products include processed fishery products, processed livestock products, rice, and liquid foods. The multilayer container of the present embodiment is particularly suitable for storing foods that are easily affected by oxygen. For details thereof, refer to the descriptions in paragraphs [0032] to [0035] of JP 2011-37199 A, the contents of which are incorporated herein.

The food product to be filled into the multilayer container of the present embodiment is not limited, but specific examples include beverages such as vegetable juice, fruit juice, teas, coffee and coffee beverages, milk and milk beverages, mineral water, ionic beverages, alcoholic beverages, lactic acid bacteria beverages, and soy milk; gel foods such as tofu, egg tofu, jelly, pudding, soft adzuki-bean jelly, mousse, yogurt, almond tofu; seasonings such as sauces, soy sauce, ketchup, noodle soup bases, Japanese dipping or topping sauces, vinegar, mirin, dressings, jams, mayonnaise, miso, pickles, and grated spices, etc.; processed meat products such as salami, ham, sausage, yakitori, meatballs, hamburger, grilled pork, and beef jerky; processed fishery products such as kamaboko fish cake, shellfish, boiled fish, and tube-shaped fish cakes; processed rice products such as porridge, cooked rice, rice casserole, and red rice; sauces such as meat sauce, mabo sauce, pasta sauce, curry, stews, and hash sauce; dairy products such as cheese, butter, cream, and condensed milk; processed egg products such as boiled eggs and soft boiled eggs; boiled vegetables and boiled beans; side dishes such as fried foods, steamed foods, stir fry, boiled foods, and baked foods; Japanese pickled vegetables; noodles and pastas such as udon, soba, and spaghetti; and syrup-preserved fruit.

Depending on the target content to be stored, the multilayer container may be disinfected or sterilized using ultraviolet rays, electron beams, gamma rays, X-rays, and the like.

Method for Manufacturing multilayer Body

The method for manufacturing the multilayer body of the present embodiment is not specified, and a well-known method for manufacturing a multilayer body can be adopted.

When manufacturing the multilayer body, it is preferable to prepare a polyester resin composition constituting the polyester resin layer and a polyamide resin composition constituting the polyamide resin layer (hereinafter collectively referred to as "resin composition"). The polyamide resin composition uses at least the xylylenediamine-based polyamide resin. When the polyamide resin composition contains another polyamide resin, the method for blending the polyamide resins is not limited. The polyamide resins may be dry-blended and supplied when fabricating a preform for a bottle, or may be melt-blended using a single-screw extruder, a twinscrew extruder, or the like prior to fabricating the preform, or a portion of the polyamide resins may be melt-blended into a master batch for use.

In addition, when blending a resin additive such as oxidation reaction accelerator into the polyamide resin layer, it may be dry-blended together with the xylylenediamine-based polyamide resin, or may be blended after a masterbatch is made with polyamide resins, etc., or may be melt-blended.

The same applies when the polyester resin composition contains two or more types of polyester resins or when it contains a resin additive.

An appropriate method for manufacturing the multilayer body is selected with consideration of the structure and the like of the molded product containing the multilayer body.

For example, when molding a film or sheet, a resin composition that has been melted through a T die, a circular die, or the like can be extruded from an extruder to manufacture the film or sheet. The obtained film can also be stretched and processed into a stretched film.

Moreover, a bottle-shaped package container can be obtained by injecting a molten resin composition into a mold from an injection molding machine to manufacture a preform, and then subjecting the preform to blow stretching (injection blow molding, injection stretch blow molding). Alternatively, a bottle-shaped package container can be obtained by blowing, in a mold, a parison obtained by extruding a molten resin composition into the mold from an extruder (direct blow molding).

A container such as a tray or a cup can be molded and obtained by a method of injecting a molten resin composition into a mold from an injection molding machine, or by a molding method such as vacuum molding or pressure molding a sheet.

The multilayer container according to the present embodiment is preferably produced by subjecting a preform to biaxial stretching and blow molding. The multilayer container of the present embodiment may be formed by cold parison molding or hot parison molding.

Cold parison molding (two-stage molding) is a molding process in which an injection molded preform is cooled to room temperature and stored, and then reheated with another device and subjected to blow molding. Hot parison molding (one-stage molding) is a method of blow molding by preheating the parison at the time of injection molding and adjusting the temperature before blowing without completely cooling the parison to room temperature. In hot parison molding, in many cases, an injection molding machine, a temperature control zone, and a blow molding machine are provided in the same molding machine unit, and preform injection molding and blow molding are performed in the same molding machine unit.

A first embodiment of the method for manufacturing a multilayer container according to the present embodiment is an aspect of molding through cold parison molding. The first embodiment of the method will be described below with reference to FIG. 1. It goes without saying that the first embodiment is not limited to the configuration illustrated in FIG. 1. In FIG. 1, first, a preform 1 is heated (FIG. 1(1)). Heating is performed using an infrared heater 2 or the like.

Next, the heated preform is biaxially stretched and blow-molded. Namely, the preform is placed in a mold 3 ((2) of FIG. 1) and blow-molded while being stretched by a stretching rod 4 ((3) and (4) of FIG. 1). Stretching is, for example, a method of heating the surface of the preform, using a mechanical means such as pressing with a core rod insert to axially stretch the preform, and stretching and blow-molding the stretched preform in a transverse direction by blowing high pressure air of usually from 2 to 4 MPa. Furthermore, in order to improve the heat resistance of the container, stretching may be combined with a blow-molding method that increases the crystallinity or reduces residual strain. An example is a method of heating the surface of a multilayer preform and blow-molding the preform inside a mold having a temperature equal to or higher than the glass transition point (single blow molding). Furthermore, the blow molding method may also be a so-called double blow molding method that includes a primary blow molding step in which the preform is biaxially stretched and blow molded to larger than the final shape, a step in which the primary blow molded product is heated and thermally shrunk to form a secondary intermediate molded product, and lastly, a secondary blow molding step in which the secondary intermediate molded product is blow molded into a final container shape.

After blow molding, the mold 3 is removed, resulting in a multilayer container 5 ((5) in FIG. 1).

A second embodiment of the method for manufacturing a multilayer container of the present embodiment is an aspect of molding through hot parison molding. In hot parison molding, a parison is blow molded by preheating at the time of injection molding and adjusting the temperature prior to blowing in one stage without completely cooling the parison to room temperature, and the parison is molded without passing through the above-described step of FIG. 1(1).

In cold parison molding and hot parison molding, the parison temperature before blow molding is determined with consideration of the glass transition temperatures (Tg) of the polyester resin constituting the polyester resin layer and the polyamide resin constituting the polyamide resin layer. The term "before blow molding" refers to, for example, after a parison passes through a preheating zone and immediately before the parison is subjected to blowing. The parison temperature is preferably a temperature greater than the glass transition temperature ($Tg_{max}$) of either the polyester resin or the polyamide resin constituting the multilayer body of the present embodiment, whichever has the highest glass transition temperature between the two, and a temperature range of $Tg_{max}$ + 0.1°C to 50°C is more preferable. Furthermore, a difference between the glass transition temperature ($Tg_{min}$) of the polyester resin or the polyamide resin, whichever has the lowest glass transition temperature between the two, and the abovementioned $Tg_{max}$ is preferably 40°C or lower, and more preferably 30°C or lower. When the difference is in such a range, blow moldability tends to further improve.

Furthermore, when at least one of the polyester resin and the polyamide resin is a crystalline resin, a large difference between the lowest temperature ($Tc_{min}$) among the crystallization temperatures (Tc) of the crystalline resins and the highest temperature ($Tg_{max}$) is preferable. Specifically, "$Tc_{min}$ - $Tg_{max}$" is preferably 5°C or more, and more preferably 10°C or more. An upper limit of 100°C for "$Tc_{min}$ - $Tg_{max}$" is practical. When the difference is in such a range, blow moldability tends to further improve.

In addition, as the method for manufacturing a multilayer container of the present embodiment, the descriptions of paragraphs [0070]-[0074] of JP 2016-198912, paragraphs [0085] to [0119] of JP 2016-169027, and JP 60-232952 A can be referenced within a range that does not depart from the spirit of the present embodiment, and the contents thereof are incorporated herein.

Examples

The present invention will next be described in more detail with reference to Examples. Materials, amounts used, proportions, processing details, and processing procedures described in the following Examples can be appropriately changed without departing from the spirit of the present invention. Thus, the scope of the present invention is not limited to the specific examples described below.

When a measuring device used in the Examples is not readily available due to, for example, discontinuation, another device with equivalent performance can be used for measurement.

1. Raw Material

<Polyester Resin>

PET: Isophthalic acid-modified polyethylene terephthalate resin (intrinsic viscosity: 0.83 dL/g), trade name: BK2180, available from Mitsubishi Chemical Corporation (melting point 248°C), isophthalic acid content relative to all carboxylic acid components: 1.4 mol%, glass transition temperature: 79°C

Polyamide Resin (PA)

MXD610 (80/20): Polyamide resin obtained in the following synthesis example

Synthesis Example of MXD610 (80/20)

In a reaction container provided with a stirrer, a partial condenser, a total condenser, a thermometer, a dropping funnel, a nitrogen gas introduction tube, and a strand die, 10000 g (68 mol) of precisely weighed adipic acid, 3460 g (17.1 mol) of sebacic acid, 0.38 g of sodium hypophosphite monohydrate ($NaH_2PO_2 \cdot H_2O$) (5 ppm by mass in terms of the phosphorus atom concentration in the polyamide resin), and 0.15 g of sodium acetate were blended, and the reaction container was sufficiently purged with nitrogen. After that, the reaction container was filled with nitrogen to an internal pressure of 0.4 MPa, and the inside of the system was heated to 190°C while stirring under a small nitrogen gas flow. 11813 g (87 mol) of meta-xylylenediamine was added dropwise to the reaction container under stirring, and the temperature inside the system was continuously increased while the condensed water produced was being removed from the system. After dropwise addition of the meta-xylylenediamine was completed, the internal temperature was increased. When the temperature reached 255°C, the pressure inside the reaction container was reduced. The internal temperature was then further increased, and a melt polycondensation reaction was continued for 10 minutes at 260°C. Subsequently, the inside of the system was pressurized with nitrogen, and the obtained polymer was removed from the strand die and pelletized, resulting in polyamide MXD610 (80/20).

The resulting polyamide MXD610 (80/20) had a melting point of 212°C and a glass transition temperature of 82°C.

MXD610 (70/30)

Synthesis Example of MXD610 (70/30)

In a reaction container provided with a stirrer, a partial condenser, a total condenser, a thermometer, a dropping funnel, a nitrogen gas introduction tube, and a strand die, 10000 g (68 mol) of precisely weighed adipic acid, 5931 g (29.3 mol) of sebacic acid, 0.44 g of sodium hypophosphite monohydrate ($NaH_2PO_2 \cdot H_2O$) (5 ppm by mass in terms of the phosphorus atom concentration in the polyamide resin), and 0.17 g of sodium acetate were blended, and the reaction container was sufficiently purged with nitrogen. After that, the reaction container was filled with nitrogen to an internal pressure of 0.4 MPa, and the inside of the system was heated to 190°C while stirring under a small nitrogen gas flow.

13500 g (99 mol) of meta-xylylenediamine was added dropwise to the reaction container under stirring, and the temperature inside the system was continuously increased while the condensed water produced was being removed from the system. After dropwise addition of the meta-xylylenediamine was completed, the internal temperature was increased. When the temperature reached 255°C, the pressure inside the reaction container was reduced. The internal temperature was then further increased, and a melt polycondensation reaction was continued for 10 minutes at 260°C. Subsequently, the inside of the system was pressurized with nitrogen, and the obtained polymer was removed from the strand die and pelletized, resulting in polyamide MXD610 (70/30).

The resulting MXD610 (70/30) had a melting point of 210°C and a glass transition temperature of 75°C.

MXD10

Synthesis Example of MXD10

Sebacic acid (available from CASDA) was placed in a jacketed reactor provided with an agitator, a partial condenser, a cooler, a thermometer, a dropping tank, and a nitrogen gas introduction tube. The reactor was sufficiently purged with nitrogen, and the sebacic acid was heated and melted at 170°C. Then, while the contents were being agitated and while m-xylylenediamine (MXDA, available from Mitsubishi Gas Chemical Company, Inc.) was gradually added dropwise to give a molar ratio of the m-xylylenediamine to the sebacic acid of 1:1, the temperature was increased to 240°C. After the completion of dropwise addition, the temperature was increased to 260°C, and the reaction was continued for 20 minutes. Thereafter, the internal pressure of the reaction system was continuously reduced to 0.08 MPa, and then the reaction was continued. After completion of the reaction, a pressure of 0.2 MPa was applied in the reactor via nitrogen gas, and the polymer was taken out as a strand from a nozzle at a lower part of the polymerization tank and cooled with water. The strand was then pelletized with a pelletizer.

The resulting MXD10 had a melting point of 190°C and a glass transition temperature of 60°C.

MXD6: Polyamide resin synthesized from meta-xylylenediamine and adipic acid, melting point: 237°C, glass transition temperature: 88°C, available from Mitsubishi Gas Chemical Company, Inc., product number: S6007

Measuring Melting Point and Glass Transition Temperature

The melting point (Tm, unit: °C) and glass transition temperature (Tg, unit: °C) of the resins were determined by differential scanning calorimetry (DSC) in accordance with JIS K7121 and K7122.

A resin (pellets) was crushed and placed into the measurement pan of a differential scanning calorimeter, and then pretreated by increasing the temperature to 300°C at a temperature increase rate of 10°C/min under a nitrogen atmosphere, followed by rapid cooling, after which the measurements were performed. As the measurement conditions, the temperature was increased to 300°C at a temperature increase rate of 10°C/min, and then maintained at 300°C for 5 minutes, after which the temperature was reduced to 100°C at a temperature decrease rate of -5°C/min, and measurements were then carried out to determine the glass transition temperature (Tg) and the melting point (Tm).

The differential scanning calorimeter used was "DSC-60" available from Shimadzu Corporation.

2. Examples 1 to 3, Comparative Examples 1 to 3, Reference Example 1

Manufacturing of Preform

An injection molding machine (model SE-DU130CI, available from Sumitomo Heavy Industries, Ltd.) with two injection cylinders, and a two-piece multilayer hot runner mold (available from Kortec, Inc.) were used to produce a preform partially having a three-layer structure of (Y)/(X)/(Y) under the conditions indicated below. Specifically, first, a thermoplastic polyester resin (PET) was injected from an injection cylinder as the material constituting the layer (Y). While the injection state of the layer (Y) was maintained, a polyamide resin (PA) (listed in Table 1) constituting the polyamide resin layer (X) was injected from a separate injection cylinder together with the PET constituting the layer (Y). Finally, the required amount of the PET constituting the layer (Y) was injected to fill the cavity, resulting in a preform (25 g) having a three-layer structure of (Y)/(X)/(Y). Table 1 presents the amount of the injected layer (Y) and the amount of the injected layer (X) when the total amount of the injected resins was taken as 100 mass%. The preform had a shape of 92 mm in total length, 22 mm in outer diameter, and 3.9 mm in wall thickness. Immediately after production, the preform was packaged in moisture-proof packaging and stored in this state until immediately before the start of biaxial stretching blowing, which will be described later.

Molding Conditions

Skin-side (Y) injection cylinder temperature: 280°C
Core-side (X) injection cylinder temperature: 260°C
Resin flow channel temperature in mold: 290°C
Mold cooling water temperature: 15°C
Cycle time: 33 s

Method for Producing Multilayer Container

A petaloid-type bottle (multilayer container) was obtained by subjecting the preform to biaxial stretching and blow molding using a biaxial stretching and blow molding device (model EFB1000ET, available from Frontier Inc.). The bottle (multilayer container) had an overall length of 223 mm, an outer diameter of 65 mm, and an internal volume of 500 mL (surface area: 0.04 $m^2$, average thickness of body: 0.33 mm), and the bottom had a petaloid shape. No dimples were provided in the body. The biaxial stretching and blow molding conditions were as indicated below. The thickness of each layer of the resulting multilayer container is as presented in Table 1. In Table 1, the thickness (mm) of each layer (layer (Y)/layer (X)/layer (Y)) is presented in order from the outer layer side.

Preform heating temperature: 105°C
Primary blow pressure: 0.9 MPa
Secondary blow pressure: 2.5 MPa
Primary blow delay time: 0.30 sec
Primary blow time: 0.30 sec
Secondary blow time: 2.0 sec
Blow exhaust time: 0.6 sec
Mold temperature: 15°C

Haze (%) of Side Surface of Multilayer Container

The haze was measured as an average value of four measurements on the side surface of a multilayer container using a haze meter in accordance with JIS K 7136.

The haze meter used was COH7700 (available from Nippon Denshoku Industries Co., Ltd., white LED light source).

Oxygen Barrier Property

The multilayer containers produced in Examples and Comparative Examples were each filled with 100 mL of water. Under conditions of an oxygen partial pressure of 0.21 atm, a multilayer container internal humidity of 100% RH (relative humidity), an external humidity of 50% RH, and a temperature of 23°C, nitrogen at 1 atm was circulated inside each multilayer container at 20 mL/min, and the amount of oxygen included in the nitrogen after circulating inside each multilayer container for 200 hours was detected using a coulometric sensor, and thereby the oxygen transmission rate (unit: cc/(bottle·day·0.21 atm)) was measured.
An oxygen transmission rate measuring device that has the product name "OX-TRAN 2/61" and that is available from MOCON Inc. was used.

Carbon Dioxide Barrier Property

The multilayer containers prepared in Examples and Comparative Examples were each filled with 500 mL of carbonated water of 4.6 GV, the caps were closed, and the containers were stored in an environment of 23°C and 50% relative humidity for 7 days. Subsequently, the shelf life of 20% carbon dioxide loss rate of each multilayer container at 23°C, 100% relative humidity inside each multilayer container, and 50% relative humidity outside each multilayer container was measured using a carbon dioxide transmission rate measuring apparatus. The unit of the carbon dioxide gas barrier property was cc/(bottle·day). The longer the shelf-life measured, the better the carbon dioxide barrier property.
"PERMATRAN-C Model 10" (trade name) available from MOCON was used as the carbon dioxide transmission rate measuring apparatus.

Side Impact Test

The resulting multilayer containers were subjected to a side impact test as follows.
First, the multilayer containers obtained as described above were each filled with 500 mL of colored carbonated water (4.2 gas volume) and capped, and then the bottles were allowed to sit for 7 days at 23°C. Thereafter, a side impact test was conducted by giving an impact on the side of each bottle (at a position that was 123 mm above the bottom) by a pendulum provided with a weight for the impact load (1862 g). The spots where delamination occurred became cloudy and could be visually distinguished, and therefore the presence of delamination in the multilayer containers was determined visually. Note that even when only a portion of a multilayer container was delaminated, the multilayer container was considered to have delaminated. The number of multilayer containers tested was five, and the delamination property was evaluated based on a value obtained by averaging the number of impacts until delamination occurred.

A: The number of impacts is 20 or more
B: The number of impacts is 10 or more and less than 20
C: The number of impacts is less than 10

[Table 1]

| | Example 1 | Example 2 | Example 3 | Comparative Example 1 | Comparative Example 2 | Comparative Example 3 | Reference Example 1 |
|---|---|---|---|---|---|---|---|
| Proportion (mass%) of (PET) in Layer (Y) | 97.5 | 95 | 95 | 97.5 | 95 | 95 | 97.5 |
| Proportion (mass%) of (PA) in Layer (X) | 2.5 | 5 | 5 | 2.5 | 5 | 5 | 2.5 |
| Thickness of Layer (Y)/Layer (X)/Layer (Y) (mm) | 150/20/135 | 150/35/120 | 150/35/120 | 150/20/135 | 150/35/120 | 150/35/120 | 150/20/135 |
| Polyamide Resin (PA) — Abbreviation | MXD610 (80/20) | MXD610 (80/20) | MXD610 (70/30) | MXD10 | MXD10 | MXD6/MXD 10 =80/20 | MXD6 |
| Polyamide Resin (PA) — Diamine species | MXDA | MXDA | MXDA | MXDA | MXDA | - | MXDA |
| Polyamide Resin (PA) — Dicarboxylic acid species (a1) | Adipic acid | Adipic acid | Adipic acid | - | - | - | Adipic acid |
| Polyamide Resin (PA) — Dicarboxylic acid species (a2) | Sebacic acid | Sebacic acid | Sebacic acid | Sebacic acid | Sebacic acid | - | - |
| Polyamide Resin (PA) — al/a2 molar ratio | 80/20 | 80/20 | 70/30 | 0/100 | 0/100 | - | 100/0 |
| Tg of Polyamide Resin (°C) | 82 | 82 | 75 | 60 | 60 | - | 88 |
| Haze (%) of Side Surface of Multilayer Bottle | 0.44 | 0.70 | 0.73 | 1.35 | 1.52 | 1.17 | 1.42 |
| Oxygen Barrier Property (cc/(bottle day 0.21 atm)) | 0.022 | 0.019 | 0.021 | 0.030 | 0.027 | 0.013 | 0.013 |
| Carbon Dioxide Gas Barrier Property (ccZ(bottle day)) | 3.50 | 2.90 | 3.22 | 4.19 | 3.52 | 2.56 | 2.72 |
| Side impact test | A | A | A | C | C | C | B |

16

EP 4 491 397 A1

"MXD6/MXD10 = 80/20" in Comparative Example 3 indicates a blend ratio (mass ratio).
The above results indicate that the multilayer body and multilayer container of the present invention had excelled oxygen barrier properties, delamination resistance (as indicated) by the side impact test evaluation), and transparency (as indicated by the haze evaluation) in a well-balanced manner. In particular, by using the $\alpha,\omega$-linear aliphatic dicarboxylic acid having from 4 to 8 carbons and the $\alpha,\omega$-linear aliphatic dicarboxylic acid having from 9 to 12 carbons in combination as the dicarboxylic acids serving as the raw material monomers of the xylylenediamine-based polyamide resin, the delamination resistance and the transparency improved remarkably. This is apparent from the fact that both the delamination resistance and the transparency were improved in Example 1 as compared with Comparative Example 1 and Reference Example 1. Furthermore, the multilayer body and multilayer container of the present invention also had excellent carbon dioxide barrier properties.

Reference Signs List

1 Preform

2 Heater

3 Mold

4 Stretching rod

5 Multilayer container

**Claims**

1. A multilayer body comprising a layer containing a polyester resin and a layer containing a polyamide resin, wherein the polyamide resin is a copolymer containing a diamine-derived structural unit and a dicarboxylic acid-derived structural unit; 70 mol% or higher of the diamine-derived structural unit is derived from xylylenediamine; and 70 mol% or higher of the dicarboxylic acid-derived structural unit is derived from an $\alpha,\omega$-linear aliphatic dicarboxylic acid having from 4 to 8 carbons and an $\alpha,\omega$-linear aliphatic dicarboxylic acid having from 9 to 12 carbons.

2. The multilayer body according to claim 1, wherein from 71.0 to 95.0 mol% of the dicarboxylic acid-derived structural unit is derived from an $\alpha,\omega$-linear aliphatic dicarboxylic acid having from 4 to 8 carbons, and from 29.0 to 5.0 mol% of the dicarboxylic acid-derived structural unit is derived from an $\alpha,\omega$-linear aliphatic dicarboxylic acid having from 9 to 12 carbons.

3. The multilayer body according to claim 1, wherein from 75.0 to 95.0 mol% of the dicarboxylic acid-derived structural unit is derived from an $\alpha,\omega$-linear aliphatic dicarboxylic acid having from 4 to 8 carbons, and from 25.0 to 5.0 mol% of the dicarboxylic acid-derived structural unit is derived from an $\alpha,\omega$-linear aliphatic dicarboxylic acid having from 9 to 12 carbons.

4. The multilayer body according to any one of claims 1 to 3, wherein the $\alpha,\omega$-linear aliphatic dicarboxylic acid having from 4 to 8 carbons contains adipic acid, and the $\alpha,\omega$-linear aliphatic dicarboxylic acid having from 9 to 12 carbons contains sebacic acid.

5. The multilayer body according to any one of claims 1 to 4, wherein 70 mol% or higher of the diamine-derived structural unit is derived from meta-xylylenediamine.

6. The multilayer body according to any one of claims 1 to 5, wherein the polyester resin contains a diol-derived structural unit and a dicarboxylic acid-derived structural unit; 70 mol% or higher of the diol-derived structural unit is derived from ethylene glycol; from 60 to 99 mol% of the dicarboxylic acid-derived structural unit is derived from at least one selected from terephthalic acid and an ester thereof; and from 40 to 1 mol% of the dicarboxylic acid-derived structural unit is derived from at least one selected from isophthalic acid and an ester thereof.

7. The multilayer body according to any one of claims 1 to 6, wherein the multilayer body is stretched.

8. A multilayer container comprising the multilayer body described in any one of claims 1 to 7.

FIG. 1

## INTERNATIONAL SEARCH REPORT

International application No.

**PCT/JP2022/045483**

| A. | CLASSIFICATION OF SUBJECT MATTER |
|---|---|

*B32B 27/34*(2006.01)i; *B32B 27/36*(2006.01)i; *B65D 65/02*(2006.01)i; *C08G 69/26*(2006.01)i; *B65D 1/00*(2006.01)i; *C08G 63/183*(2006.01)i
FI:   B32B27/36; B32B27/34; B65D1/00 111; B65D65/02 E; C08G63/183; C08G69/26

According to International Patent Classification (IPC) or to both national classification and IPC

| B. | FIELDS SEARCHED |
|---|---|

Minimum documentation searched (classification system followed by classification symbols)

B32B1/00-43/00;B65D1/00-1/48;B65D65/00-65/46;C08G63/00-64/42;C08G69/00-69/50

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2014-57632 A (MITSUBISHI GAS CHEMICAL CO., INC.) 03 April 2014 (2014-04-03) | 1, 4-8 |
| | claims, paragraphs [0024], [0035]-[0062], example 5, table 1 | |
| A | | 2-3 |
| A | JP 2017-56956 A (MITSUBISHI GAS CHEMICAL CO., INC.) 23 March 2017 (2017-03-23) | 1-8 |
| | paragraph [0077] | |
| X | JP 2010-241910 A (MITSUBISHI GAS CHEMICAL CO., INC.) 28 October 2010 (2010-10-28) | 1, 4-5, 7-8 |
| | claims, paragraphs [0037]-[0045], examples 3, 4, table 1 | |
| A | | 2-3, 6 |
| X | JP 2010-253803 A (MITSUBISHI GAS CHEMICAL CO., INC.) 11 November 2010 (2010-11-11) | 1, 4-5, 7-8 |
| | claims, paragraphs [0033]-[0042], examples 2, 4, table 1 | |
| A | | 2-3, 6 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 February 2023** | **28 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/045483**

| Patent document cited in search report | | | Publication date (day/month/year) | Patent family member(s) | Publication date (day/month/year) |
|---|---|---|---|---|---|
| JP | 2014-57632 | A | 03 April 2014 | (Family: none) | |
| JP | 2017-56956 | A | 23 March 2017 | (Family: none) | |
| JP | 2010-241910 | A | 28 October 2010 | (Family: none) | |
| JP | 2010-253803 | A | 11 November 2010 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016169027 A
- JP 60232952 A
- JP 2006111718 A
- JP 2017105873 A
- WO 2013168804 A
- WO 2021177126 A

- JP 2011132550 A
- JP 2229023 A
- JP 2021080025 A
- JP 2011037199 A
- JP 2016198912 A